# EUROPÄISCHE PATENTSCHRIFT

(11) **EP 3 455 620 B1**
(45) Veröffentlichungstag und Bekanntmachung des Hinweises auf die Patenterteilung: **13.11.2024**
(21) Anmeldenummer: 17722684.2
(22) Anmeldetag: 12.05.2017
(51) Int. Cl.: G01N 30/60, B01L 3/00

(54) **KAPILLARANSCHLUSSEINHEIT FÜR ANALYSEGERÄTE UND MEDIZINISCHE GERÄTE**
CAPILLARY CONNECTION UNIT FOR ANALYSERS AND MEDICAL DEVICES
UNITE DE RACCORDEMENT CAPILLAIRE POUR APPAREILS D'ANALYSE ET APPAREILS MEDICAUX

(30) Priorität: 12.05.2016 EP 16001083
(43) Veröffentlichungstag der Anmeldung: 20.03.2019
(73) Patentinhaber: Möller Medical GmbH, 36043 Fulda (DE)
(72) Erfinder: HIRMER, Frank, 36110 Schlitz (DE); FRANK, Michael, 36137 Grossenlüder (DE)
(74) Vertreter: Graf von Stosch Patentanwaltsgesellschaft mbH
(86) Internationale Anmeldenummer: PCT/EP2017/000584
(87) Internationale Veröffentlichungsnummer: WO 2017/194193

(56) Entgegenhaltungen:
- WO-A1-2013/024345
- DE-A1- 102012 110 991
- DE-B3- 102009 022 368
- DE-B3- 102011 050 037
- GB-A- 2 482 175
- US-A- 5 669 637

## Beschreibung

Die Erfindung betrifft ein Kapillaranschlusseinheit für Analysegeräte und medizinische Geräte nach Patentanspruch 1, mit einer Kapillare, die wenigstens einen Endabschnitt und daran ein freies Ende aufweist, mit wenigstens einem an dem Endabschnitt der Kapillare angeordneten Anschlusselement, wobei das Anschlusselement eine axiale Durchführung aufweist, durch welche die Kapillare verläuft, mit einem Dichtelement, welches die Kapillare wenigstens an ihrem freien Ende umgibt und mit einem metallischen Hülsenelement, welches zumindest bereichsweise das Dichtelement radial außen umgibt, und welches ein erstes, dem Anschlusselement zugewandtes Ende und einen dem Anschlusselement abgewandten Aufnahmebereich aufweist, wobei das Anschlusselement mit dem freien Ende der Kapillare dazu eingerichtet ist lösbar mit einem Gegenelement verbunden zu werden und eine axiale Schubkraft auf das Dichtelement auszuüben.

Die Erfindung betrifft insbesondere eine Kapillaranschlusseinheit für Analysegeräte und medizinische Geräte mit individuellen Merkmalen von Patentanspruch 1.

Kapillaranschlüsse für Analysegeräte und medizinische Geräte bestehen in der Regel aus einer Steckerverbindung zwischen einem Kapillar-Anschlusselement und einem Gegenelement, das einen Aufnahmeraum zum Einführen eines Endes des Kapillar-Anschlusselements aufweist. Die Elemente sind vorzugsweise als sogenannte "Fittings" ausgebildet, die miteinander verschraubbar sind. Am einführseitigen Ende des Kapillar-Anschlusselements ist ein Dichtelement vorgesehen, welches die Verbindung zwischen Kapillar-Anschlusselement und Gegenelement bzw. Kapillar-Anschlussstecker und Gegenstecker im Bereich der sich gegenüberliegenden Kapillarenöffnungen abdichten soll und zwar auch bei höheren Drücken. Durch die Verschraubung von Kapillar-Anschlusselement und Gegenelement kann das Dichtelement dabei mit hoher Anpresskraft auf eine ihm gegenüberliegende Wandung des Gegenelements angedrückt werden.

Die DE 10 2009 022 368 B3 offenbart eine Steckereinheit für das Verbinden von Kapillaren, insbesondere für die Hochleistungsflüssigkeitschromatographie, mit einem Steckergehäuse, welches eine axiale Bohrung aufweist, mit einer Steckerkapillare, welches durch die axiale Bohrung des Steckergehäuses ragt, und mit einem im Querschnitt ringförmigen Dichtelement, welches die Steckerkapillare umgreift und dass das vordere Ende der Steckerkapillare durch eine elastische und/oder plastische Deformation des Dichtelements gegen die Kapillarenaufnahmeöffnung der Buchseneinheit abgedichtet wird. Das Steckergehäuse ist dabei so ausgebildet, dass es mit einer Buchseneinheit lösbar verbindbar ist, wobei das vordere Ende der Steckerkapillare im verbundenen Zustand von Steckereinheit und Buchseneinheit in eine Kapillarenaufnahmeöffnung der Buchseneinheit ragt und mit seiner Stirnfläche im Wesentlichen fluchtend einem vorderen Ende einer Buchsenkapillare oder einer Buchsenkapillarenöffnung der Buchseneinheit gegenüberliegt. Im verbundenen Zustand von Steckereinheit und Buchseneinheit soll das Dichtelement mittelbar oder unmittelbar mit einer axialen Anpresskraft beaufschlagt werden. Die DE 10 2009 022 368 B3 sieht ferner ein als Hülse ausgebildetes hohlzylindrisches Druckstück vor, welches das Dichtelement in einem von der Stirnfläche der Steckerkapillare abgewandten axialen Bereich umgreift. Das Druckstück weist eine der Stirnfläche der Steckerkapillare abgewandte, rückwärtige Stirnseite auf, die im verbundenen Zustand von Steckereinheit und Buchseneinheit vom Steckergehäuse mit einer axialen Druckkraft beaufschlagbar ist. Das Druckstück und das Dichtelement sind mit der Steckerkapillare fest verbunden, so dass die axiale Druckkraft auf die Stirnfläche des Dichtelements übertragbar ist, ohne dass eine Relativbewegung zwischen Druckstück und Dichtelement einerseits und der Steckerkapillare andererseits erfolgt. Bei diesem System muss das Dichtelement aus PEEK (Polyetheretherketon) sich im Dichtbereich umfänglich um einige 10tel mm ausdehnen können um eine Dichtigkeit zu erreichen. Durch die Fließfähigkeit des PEEK Materials unter Druck muss diese Verbindung regelmässig nachgezogen werden, da ansonsten die umfängliche Dichtigkeit nachlässt.

Eine Kapillaranschlusseinheit zum Verbinden von Kapillaren ist ebenfalls aus DE 10 2012 110991 A1 bekannt.

Ausgehend von diesem Stand der Technik liegt der Erfindung die Aufgabe zugrunde, eine Kapillaranschlusseinheit bereitzustellen, die eine verbesserte, sichere und wartungsarme Anwendung sowie eine gute Dichtigkeit auch bei Hochdruckanwendungen ermöglicht. Ferner ist es wünschenswert,ein Ausweichen des Dichtelements in Toträume (Toleranzfelder des Dichtbereichs) sowie ein Verquetschen des Dichtelements in den Kapillarkanal hinein bzw. ein Verkleinern des Kapillarkanals zu verhindern.

Diese Aufgabe wird durch eine Kapillaranschlusseinheit gemäß Patentanspruch 1 gelöst. Vorteilhafte Ausgestaltungen der erfindungsgemäßen Kapillaranschlusseinheit sind Gegenstand der weiteren Patentansprüche und ergeben sich aus der nachfolgenden Beschreibung der Erfindung.

Erfindungsgemäß ist das Hülsenelement sowohl gegenüber dem Anschlusselement als auch gegenüber der Kapillare mit dem Dichtelement axial verschieblich geführt, wobei ein Innendurchmesser d_{iH} des Hülsenelements in dem, dem Anschlusselement abgewandten Aufnahmebereich mindestens so groß ist wie der Außendurchmesser d_{aD} des Dichtelements und wobei das Hülsenelement dazu konfiguriert ist, das Dichtelement im Wesentlichen vollständig in seinen Aufnahmebereich aufzunehmen und wobei das Hülsenelement an seinem dem Anschlusselement zugewandten ersten Ende eine, in axialer Richtung dem Anschlusselement zugewandte erste Schubfläche zur Aufnahme der Schubkraft des Anschlusselements und nur eine radial innenliegende, zu einem dem Anschlusselement abgewandten Ende axial beabstandete und dem Dichtelement zugewandte zweite Schubfläche zur Weiterleitung der Schubkraft an das Dichtelement aufweist. Vorzugsweise liegt die Schubfläche vollständig in einer Ebene, die die Längsachse des Hülsenelements senkrecht schneidet.

Durch die erfindungsgemäße Ausgestaltung der Kapillaranschlusseinheit wird zum einen erreicht, dass auf das Dichtelement ein hohe Schubkraft ausgeübt werden kann, ohne dass dieses nach radial außen ausweichen kann, da es von dem Hülsenelement umgeben ist. Durch die Verpressung bei einem Anziehen von Anschlusselement und Gegenelement wird das Dichtelement also vor allem nach radial innen, gegen die Kapillare, und nach radial außen, gegen das Hülsenelement, gedrückt,wodurch eine optimale Dichtung erreicht wird, die Toträume bzw. Dichtraum-Toleranzfelder vermeidet. Durch die relative Verschieblichkeit des Hülsenelements gegenüber dem Dichtelement kann sich diese Materialverdrängung des Dichtelements im Bereich seiner Außenmantelfläche großflächig verteilen. Das metallische Hülsenelement übernimmt dabei ebenfalls eine Dichtfunktion, indem es mit seiner freien Stirnseite an eine Dichtfläche im Gegenelement anlegbar ist.

Gleichzeitig ist es nach einem Lösen der Verbindung von Anschlusselement und Gegenelement möglich, das Hülsenelement von dem Dichtelement herunterzuschieben, um das Dichtelement auf mögliche Rissbildungen hin in Augenschein zu nehmen. Beschädigte Dichtungen und somit nicht mehr verwendbare Kapillaranschlusseinheiten können somit leicht erkannt und ausgesondert werden.

In einer vorteilhaften Fortbildung der Erfindung ist das Dichtelement mit der Kapillare stoffschlüssig und fest verbunden, wodurch eine optimale Abdichtung zur Kapillare erzielt wird.

Vorteilhaft besteht das Dichtelement aus wenigstens einem Material der Gruppe beinhaltend Fluorkunststoffe, Polyaryletherketone (PAEK), Mischungen aus Fluorkunststoffen und Polyaryletherketonen (PAEK), insbesondere ausgewählt aus der Gruppe beinhaltend Polytetrafluorethylen (PTFE), Polyvinylidenfluorid (PVDF), Polyetherketon (PEK), Polyetheretherketon (PEEK), Polyetherketonketon (PEKK), Polyetheretheretherketon (PEEEK), Polyetherketonetherketonketon (PEKEKK), und Polyetheretherketonetherketon (PEEKEK). Mehrere Materialien der Gruppe können dabei kombiniert werden, z.B. in dem das Dichtelement in Schichten ausgebildet ist, wobei z.B. unter Druck besonders fließfähiges Material radial außen und innen und weniger fließfähiges Material in einem Kernbereich des Dichtelements verwendet wird. Polyetherketon (PEK), Polyetheretherketon (PEEK) und Polyetherketonketon (PEKK) werden bevorzugt verwendet, wobei Polyetheretherketon (PEEK) am meisten bevorzugt wird. Das Dichtelement aus PEEK oder einem anderen vorgenannten Material kann z.B. auf die Kapillare aufgespritzt sein.

In einer günstigen Ausgestaltung der Erfindung ist die zweite Schubfläche des Hülsenelements als Kreisringfläche ausgebildet ist, wobei ein Querschnitts-Radius r_{QS} = rₛ - r_{i,min} der zweiten Schubfläche (15.2) und ein maximaler Querschnitts-Radius r_{QH} = r_{H} - r_{i,min} des Hülsenelements (14) mindestens im Verhältnis r_{QH} : r_{QS} von 1,5:1 stehen und wobei r_{i,min} der minimale Innenradius des Hülsenelements ist, rₛ der Außenradius der zweiten Schubfläche ist und r_{H} der Außenradius des Hülsenelements ist. Hierdurch wird eine gute Schubübertragung vom Hülsenelement auf das Dichtelement gewährleistet. Vorzugsweise liegt das Verhältnis r_{QH} : r_{QS} im Bereich von 1,5:1 bis 1,75:1.

Weiter vorteilhaft ist es, wenn die Kapillare zumindest im Endabschnitt der Kapillare mehrschalig, bzw. aus mehreren konzentrischen Schichten, vorzugsweise zweischalig, bzw. aus zwei konzentrischen Schichten, ausgebildet ist. Durch diese Ausgestaltung der Kapillare können die Materialeigenschaften von zwei oder mehreren Materialien in der Kapillare miteinander kombiniert werden. So könnte z.B. eine innere Schicht oder Schale der Kapillare aus einem diffusionsresistenten aber ggf. weniger elastischen Material bestehen, während eine zweite äußere Schale oder Schicht aus einem elastischeren Material ausgebildet ist.

Vorteilhaft ist eine innere Schale der Kapillare aus einem Material der Gruppe beinhaltend Glas, insbesondere fused Silica, thermoplastisches Material, wie z.B. PEEK, Metall und Keramik gebildet. Als Keramik können Voll- oder Teilkeramiken Verwendung finden. Die Keramik kann aus einem oder mehreren Materialien ausgewählt aus der Gruppe beinhaltend Carbide, Nitride und/oder Oxide (oder anderen) bestehen oder eine Keramik eines oder mehrerer Elemente, ausgewählt aus der Gruppe, bestehend aus Bor, Aluminium, Silizium, Germanium, Zirkonium, Cer, Seltene Erden (oder anderen) sein. Das Keramikmaterial ist vorzugsweise ausgewählt aus der Gruppe, bestehend aus Siliziumcarbid, Siliziumnitrid, Siliziumoxid, Zirkoniumoxid, Zirkoniumcarbid, Titanoxid, Aluminiumoxid, Titancarbid und Komposite und/oder Gemischen davon. Eine äußere Schale ist z.B aus einem Material der Gruppe beinhaltend thermoplastisches Material, wie z.B. PEEK, Metall, insbesondere Edelstahl oder Titan gebildet. Als thermoplastisches Material der inneren Schale und der äußeren Schale kommen Fluorkunststoffe, Polyaryletherketone (PAEK), Mischungen aus Fluorkunststoffen und Polyaryletherketonen (PAEK), insbesondere ausgewählt aus der Gruppe beinhaltend Polytetrafluorethylen (PTFE), Polyvinylidenfluorid (PVDF), Polyetherketon (PEK), Polyetheretherketon (PEEK), Polyetherketonketon (PEKK), Polyetheretheretherketon (PEEEK), Polyetherketonetherketonketon (PEKEKK), und Polyetheretherketonetherketon (PEEKEK) in Betracht.

Unter fused Silica wird dabei Kieselglas (reines Siliziumdioxid) verstanden, das durch Schmelzen von Quarz (kristallinem Siliziumdioxid) bei Temperaturen über 1705 Grad Celsius mit anschließender Abkühlung erhalten wird.

Vorzugsweise weist die Kapillare, bspw. über ihre gesamte Länge, zumindest aber im Endabschnitt der Kapillare, einen im Wesentlichen gleichbleibenden Innendurchmesser auf.

Der Innendurchmesser der Kapillare ist bevorzugt nicht verengt, zumindest im Bereich des Endabschnitt der Kapillare, insbesondere bei mehrschaliger (bspw. zweischaliger) Ausführung der Kapillare oder deren Endabschnitts. So weist die Kapillaranschlusseinheit vorzugsweise keine Bauteile auf, die den Innendurchmesser der Kapillare (bzw. den Durchflussraum) bspw. im Bereich des Endabschnitt der Kapillare verengen. Es ist auch bevorzugt, dass die Kapillare, insbesondere im Bereich des wenigstens einen Endabschnitts, keine Verengungen ihres Innendurchmessers, bspw. durch Ausstülpungen (der Kapillarwände) oder Einsätze, aufweist.

Weiterhin ist es bevorzugt, dass die Kapillaranschlusseinheit keinen (röhrenförmigen) Kapillareinsatz mit ringförmigem Abschluss (am Ende der Kapillare) aufweist. Mit anderen Worten, die Kapillaranschlusseinheit weist vorzugsweise (am Ende der Kapillare) keinen (röhrenförmigen) Kapillareinsatz auf, insbesondere keinen (röhrenförmigen) Kapillareinsatz mit ringförmigem Abschluss. Derartige Kapillareinsätze dienen insbesondere dem Abschluss des Kapillarendes. In der Regel werden solche Kapillareinsätze zumindest teilweise (z.B. mit ihrem "Stamm" (Röhre)) in die Kapillare eingeführt, wodurch sich bspw. eine Verengung des Durchflussraumes ergibt. Derartige Kapillareinsätze sind bspw. aus der US-Patentschrift US 5,669,637 bekannt. In diesem Sinne ist das Kapillarende der erfindungsgemäßen Kapillaranschlusseinheit besonders bevorzugt "einstückig" ausgeführt (d.h. ohne zusätzliches "Abschlussstück", wie bspw. ein (röhrenförmiger) Kapillareinsatz mit ringförmigem Abschluss).

In der Erfindung ist radial außen an der Kapillare in einem
Bereich direkt angrenzend an das Dichtelement zum Anschlusselement hin ein stationäres Sicherungselement angeordnet, das mit der Kapillare stoffschlüssig verbunden ist und mit dem Dichtelement über eine Verzahnung stoff- und formschlüssig verbunden ist. Das Sicherungselement verhindert dabei ein Abdrehen des Dichtelements von der Kapillare für den Fall, dass Rotationskräfte auf das Dichtelement einwirken.

Das stationären Sicherungselement ist vorteilhaft aus einem Metall, insbesondere einem Stahl gefertigt. Weiter vorteilhaft ist das Sicherungselement ring- oder hülsenförmig ausgebildet und umfängt die Kapillare bereichsweise. Durch diese Ausgestaltung weist das Sicherungselement eine hohe Festigkeit auf und Schubkräfte können aufgrund der Ringform gleichmäßig vom Sicherungselement aufgenommen werden.

Weiter vorteilhaft kann die radial innenliegende zweite Schubfläche des Hülsenelements vermittelt über das stationäre Hülsenelement mit dem Dichtelement zur Übertragung der Schubkraft des Anschlusselements zusammenwirken. D.h. die Schubkraft wird mittels des Sicherungselements auf das Dichtelement übertragen. Bei einer Ausgestaltung des Sicherungselements und des Hülsenelements aus Metall, insbesondere aus Stahl bzw. aus Edelstahl, wird die Schubkraft dabei zwischen zwei Elementen mit im Wesentlichen gleicher Festigkeit übertragen, wodurch die Kraftübertragung optimiert wird.

Das Anschlusselement kann als (massives) HPLC-Fitting-Element oder als Drehmoment-Fitting oder als Fitting mit Überlastungskupplung ausgebildet sein. Bevorzugt handelt es sich um ein Fitting mit einem Ratschencharakter und damit ratschenartiger Funktion.

In einer weiteren günstigen Weiterbildung der Erfindung ist das Anschlusselement auf der Kapillare begrenzt verschiebbar geführt ist, wobei die Verschiebbarkeit des Anschlusselements auf der Kapillare durch ein mit der Kapillare ortsfest verbundenes Stoppelement begrenzt ist, wodurch die Handhabung der Kapillaranschlusseinheit erleichtert wird.

Die Erfindung wird nachfolgend anhand eines in den Zeichnungen dargestellten Ausführungsbeispiels näher erläutert. In den Zeichnungen zeigen:
- Fig. 1:: eine erfindungsgemäße Kapillaranschlusseinheit;
- Fig. 2:: die Kapillaranschlusseinheit aus Fig. 1 im Längsschnitt;
- Fig. 3:: die Kapillaranschlusseinheit aus Fig. 1 im Längsschnitt mit relativ zu einander verschobenen Bauteilen;
- Fig. 4:: eine Detailansicht der Kapillaranschlusseinheit gemäß der Markierung IV aus Fig. 2;
- Fig. 5:: eine Detailansicht des Dichtelements und des Sicherungselements der Kapillaranschlusseinheit aus Fig. 1;
- Fig. 6:: die Kapillaranschlusseinheit im mit einem Gegenelement verbundenen Zustand im Längsschnitt;
- Fig. 7:: eine weitere erfindungsgemäße Kapillaranschlusseinheit im Längsschnitt;
- Fig. 8:: eine Detailansicht der Kapillaranschlusseinheit gemäß der Markierung VIII aus Fig. 7;
- Fig. 9:: eine Detailansicht des Dichtelements und des Sicherungselements der Kapillaranschlusseinheit aus Fig. 7;
- Fig. 10:: eine Detailansicht des Dichtelements und des Sicherungselements der Kapillaranschlusseinheit aus Fig. 7 im Längsschnitt;
- Fig. 11:: eine weitere erfindungsgemäße Kapillaranschlusseinheit im Längsschnitt;
- Fig. 12:: eine Detailansicht der Kapillaranschlusseinheit gemäß der Markierung XII aus Fig. 11;
- Fig. 13:: eine weitere Kapillaranschlusseinheit im Längsschnitt mit relativ zueinander verschobenen Bauteilen;
- Fig. 14:: die Kapillaranschlusseinheit aus Fig. 13 im Längsschnitt;
- Fig. 15:: eine weitere erfindungsgemäße Kapillaranschlusseinheit im Längsschnitt;
- Fig. 16:: eine Detailansicht der Kapillaranschlusseinheit gemäß der Markierung XVI aus Fig. 15.

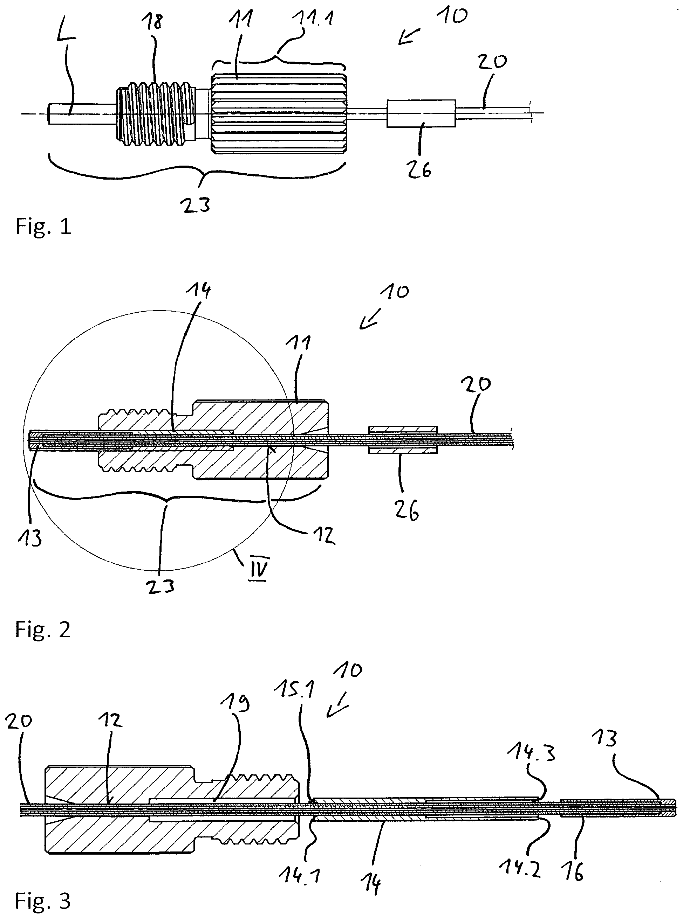

In den Figuren 1 bis 6 ist eine erste erfindungsgemäße Kapillaranschlusseinheit 10 dargestellt. Die Kapillaranschlusseinheit 10 umfasst ein Anschlusselement 11, das einen Betätigungsabschnitt 11.1 und ein Gewinde 18 aufweist, wobei das Anschlusselement 11 eine axiale Durchführung 12 für eine Kapillare 20 aufweist. Das Anschlusselement 11 ist an einem Endabschnitt 23 einer Kapillare 20 angeordnet und dabei auf der Kapillare 20 verschieblich geführt. Ferner ist das Anschlusselement 11 gegenüber der Kapillare 20 auch frei drehbar, wobei die Kapillare 20 die Rotationsachse bildet. Die Verschiebbarkeit des Anschlusselements 11 auf der Kapillare 20 ist durch ein mit der Kapillare 20 ortsfest verbundenes Stoppelement 26 begrenzt.

Im Bereich eines freien Endes 24 der Kapillare 20 ist umfänglich um die Kapillare 20 herum ein Dichtelement 13 aus einem elastischen Material, insbesondere einem elastischen Kunststoffmaterial, insbesondere einem Thermoplast wie z.B. einem oder mehreren Materialien der Gruppe beinhaltend Fluorkunststoffe, Polyaryletherketone (PAEK), Mischungen aus Fluorkunststoffen und Polyaryletherketonen (PAEK), insbesondere ausgewählt aus der Gruppe beinhaltend Polytetrafluorethylen (PTFE), Polyvinylidenfluorid (PVDF), Polyetherketon (PEK), Polyetheretherketon (PEEK), Polyetherketonketon (PEKK), Polyetheretheretherketon (PEEEK), Polyetherketonetherketonketon (PEKEKK), und Polyetheretherketonetherketon (PEEKEK), bevorzugt Polyetherketon (PEK), Polyetheretherketon (PEEK) und Polyetherketonketon (PEKK), und am meisten bevorzugt Polyetheretherketon (PEEK), angeordnet und stoffschlüssig mit der Kapillare 20 fest verbunden. Die Kapillare 20 ist dabei vorliegend zweischalig ausgebildet und weist eine Innenkapillare oder erste Schale 21 und eine Außenkapillare oder zweite Schale 22 auf, die miteinander verbunden sind (z.B. stoffschlüssig oder kraftschlüssig), wobei die Innenkapillare z.B. aus einem Thermoplasten, aus Glas bzw. fused Silica, Metall, wie z.B. Edelstahl oder Titan, oder Keramik gebildet ist. Die Außenkapillare oder zweite Schale 22 ist z.B. als Edelstahl- oder Titanrohr ausgebildet, das kraft- oder stoffschlüssig mit der Innenkapillare verbunden ist. Alternativ könnte die zweite Schale 22 auch aus einem Thermoplasten gebildet sein.

Als Thermoplasten für die Kapillarschalen kommen, wie auch beim Dichtelement 13, ein oder mehrere Materialien der Gruppe beinhaltend Fluorkunststoffe, Polyaryletherketone (PAEK), Mischungen aus Fluorkunststoffen und Polyaryletherketonen (PAEK), insbesondere ausgewählt aus der Gruppe beinhaltend Polytetrafluorethylen (PTFE), Polyvinylidenfluorid (PVDF), Polyetherketon (PEK), Polyetheretherketon (PEEK), Polyetherketonketon (PEKK), Polyetheretheretherketon (PEEEK), Polyetherketonetherketonketon (PEKEKK), und Polyetheretherketonetherketon (PEEKEK), bevorzugt Polyetherketon (PEK), Polyetheretherketon (PEEK) und Polyetherketonketon (PEKK) in Frage.

Als Keramik können Voll- oder Teilkeramiken Verwendung finden. Die Keramik kann aus einem oder mehreren Materialien ausgewählt aus der Gruppe beinhaltend Carbide, Nitride und/oder Oxide (oder anderen) bestehen oder eine Keramik eines oder mehrerer Elemente ausgewählt aus der Gruppe bestehend aus Bor, Aluminium, Silizium, Germanium, Zirkonium, Cer, Seltene Erden (oder anderen) sein. Das Keramikmaterial ist vorzugsweise ausgewählt aus der Gruppe bestehend aus Siliziumcarbid, Siliziumnitrid, Siliziumoxid, Zirkoniumoxid, Zirkoniumcarbid, Titanoxid, Aluminiumoxid, Titancarbid und Komposite und/oder Gemischen davon.

Unter fused Silica wird dabei Kieselglas (reines Siliziumdioxid) verstanden, das durch Schmelzen von Quarz (kristallinem Siliziumdioxid) bei Temperaturen über 1705 Grad Celsius mit anschließender Abkühlung erhalten wird. Die erkaltete Schmelze ist amorph, also ungeordnet. Durch das Einhalten bestimmter Temperaturen lassen sich Kieselgläser mit hoher Transparenz und sehr wenigen OH-Gruppen erzeugen - letzteres ist von Vorteil, wenn eine Adsorption bestimmter Moleküle auf der Oberfläche unerwünscht ist, z.B. bei GC und HPLC Anwendungen.

Die hohe chemische Inertheit, die große Temperaturbeständigkeit und die Transparenz sowie dass sich dünnste Kapillaren aus fused Silica herstellen lassen ist dabei äusserst vorteilhaft.

In der vorliegenden Ausführungsform der Kapillaranschlusseinheit 10 überragt die Innenkapillare 21 zum freien Ende 24 der Kapillare 20 hin die Außenkapillare 22 z.B. um einige zehntel Millimeter bis hin zu mehreren Millimetern. Das Dichtelement 13 ist in diesem Endbereich am freien Ende 24 der Kapillare 20 direkt mit der Innenkapillare 21 stoffschlüssig verbunden. Im rückwärtigen Bereich ist das Dichtelement 13 auch mit der Außenkapillare 22 stoffschlüssig verbunden, z.B. verklebt oder verschweißt. In axialer Richtung einer Längsachse L der Kapillaranschlusseinheit 10 weg vom freien Ende 24 der Kapillare 20 schließt sich an das Dichtelement 13 ein Sicherungselement 16 in Form einer metallischen Hülse, die fest mit der Außenkapillare 22 verbunden ist, an das Dichtelement 13 an. Die feste Verbindung zwischen der z.B. metallischen Außenkapillare 22 und dem Sicherungselement 16 aus Metall erfolgt z.B. durch Verschweißen oder Verlöten oder auch durch Verkleben beider Teile miteinander. An dem Sicherungselement 16 ist wenigstens ein Zahn 17.1 ausgebildet, der zusammen mit Gegenzähnen des Dichtelements eine Verzahnung 17 ausbildet, wobei die Zähne 17.1 am Sicherungselement 16 Hinterschnitte 17.2 ausbilden, um neben einer guten stoffschlüssigen Verbindung mit dem Dichtelement 13 auch eine formschlüssige mechanische Verbindung mit dem Dichtelement 13 herzustellen. Über das Sicherungselement 16 wird eine Drehsicherung des Dichtelements 13 gegenüber der Kapillare 20 hergestellt.

Die Kapillaranschlusseinheit 10 weist ferner noch ein metallisches Hülsenelement 14 auf, welches das Dichtelement 13 zumindest bereichsweise radial außen umgibt und welches kreiszylindrisch ausgebildet ist. Das metallische Hülsenelement 14 weist ein erstes, dem Anschlusselement 11 zugewandtes Ende 14.1 und ein zweites dem Anschlusselement 11 abgewandtes Ende 14.2 auf. Ausgehend von seinem zweiten Ende 14.2 weist das Hülsenelement 14 einen dem Anschlusselement 11 abgewandten kreiszylindrischen Aufnahmebereich 14.3 für das Dichtelement 13 und das Sicherungselement 16 auf. Ein Innendurchmesser d_{iH} des Hülsenelements 14 im Aufnahmebereich 14.3 ist mindestens so groß wie der Außendurchmesser d_{aD} des Dichtelements 13, so dass sich das Dichtelement 13 und das Sicherungselement 16, welches den gleichen Außendurchmesser wie das Dichtelement 13 aufweist, gut in den Aufnahmebereich 14.3 des Hülsenelements hineinbewegen lässt. Gleichzeitig ist der Innendurchmesser d_{iH} des Hülsenelements 14 im Aufnahmebereich 14.3 aber höchstens 5/100 mm größer als der Außendurchmesser d_{aD} des Dichtelements 13, so dass das Dichtelement 13, wenn es gestaucht wird, sich dichtend an das Hülsenelement 14 anlegen kann. Das Hülsenelement 14 ist dabei sowohl gegenüber dem Anschlusselement 11 als auch gegenüber der Kapillare 20 und damit ebenfalls gegenüber dem Dichtelement 13 axial verschieblich geführt. Das Anschlusselement 11 ist relativ zum Hülsenelement 14 verdrehbar. Das Sicherungselement 16 kann vollständig in den Aufnahmebereich 14.3 eingeführt werden, wie aus den Figuren 1, 2, 3, 4 und 6 ersichtlich. Das Dichtelement 13 kann ebenfalls im Wesentlichen vollständig in den Aufnahmebereich 14.3 eingeschoben werden, wobei im Wesentlichen bedeutet, dass gegebenenfalls einige hundertstel Millimeter des Dichtelements 13 das zweite Ende 14.2 des Hülsenelements 14 noch überragen können.

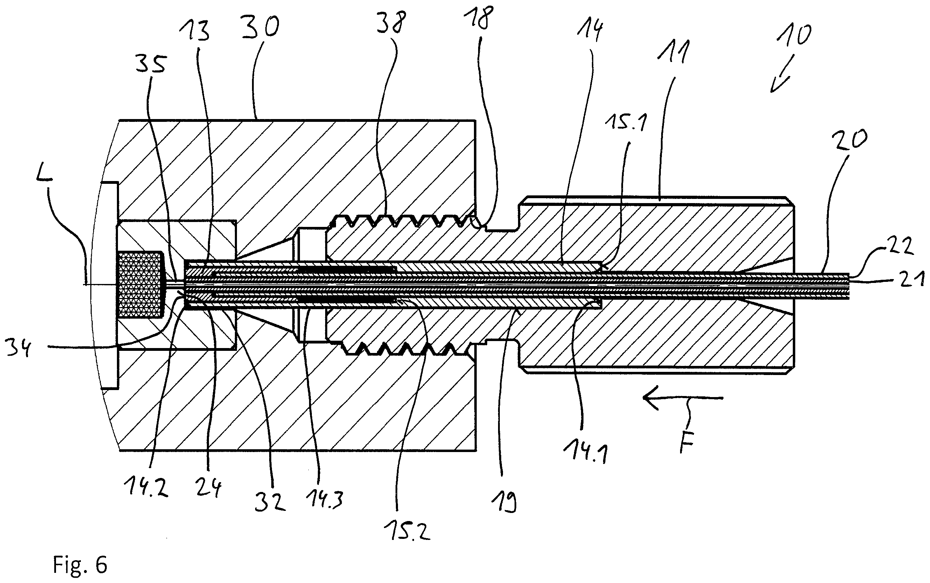

Vorliegend weist das Anschlusselement 11 noch eine kreiszylindrische Aufnahme in Form eines Sacklochs 19 auf. Das Hülsenelement 14 kann zumindest teilweise in dem Sackloch 19 bzw. der Aufnahme im Anschlusselement 11 aufgenommen werden. Es liegt dann mit seinem dem Anschlusselement 11 zugewandten ersten Ende 14.1 an einer Anschlagfläche 19.1 des Anschlusselements 11 an. Das erste Ende 14.1 des Hülsenelements 14 weist dabei eine erste Schubfläche 15.1 auf, auf die eine Schubkraft F von der Anschlagfläche 19.1 auf das Hülsenelement 14 übertragen werden kann, wenn die Kapillaranschlusseinheit 10, wie in Fig. 6 dargestellt, in ein Gegenelement 30 eingeschraubt wird zur Herstellung einer Fluidverbindung zwischen dem Gegenelement 30 und der Kapillaranschlusseinheit 10. Zur Herstellung einer solchen Schraubverbindung weist das Gegenelement 30 ein Gegengewinde 38 auf, das mit dem Gewinde 18 des Anschlusselements 11 in Eingriff bringbar ist.

Das Hülsenelement 14 weist ferner noch eine radial innenliegende zweite Schubfläche 15.2 auf, die von dem, dem Anschlusselement 11 abgewandten zweiten Ende 14.2 axial beabstandet ist. Über diese Schubfläche 15.2 kann die Schubkraft F, welche vom Anschlusselement 11 bei Einschrauben in das Gegenelement 30 auf das Hülsenelement 14 ausgeübt wird, an das Dichtelement 13 weitergegeben werden. Diese Weiterleitung erfolgt dabei in der vorliegenden Ausführungsform vermittelt über das Sicherungselement 16, welches mit dem Dichtelement 13 verzahnt ist. Aufgrund der auf das Dichtelement 13 übertragenen Schubkraft F des Anschlusselements 11 wird dieses beim Einschrauben der Kapillaranschlusseinheit 10 in das Gegenelement 30 gegen eine Dichtfläche 34 im Aufnahmeraum 32 des Gegenelements 30 gepresst, wobei gegebenenfalls verdrängtes Material des Dichtelements 30 in den Aufnahmebereich 14.3 im Hülsenelement 14 hineingedrückt wird. Totwasserräume im Anlagebereich der Kapillare 20 mit dem Kapillarkanal 25 an den Kanal 35 des Gegenelements 30 werden dabei zuverlässig vermieden. Ferner kann die Dichtung 13 mit hoher Kraft an die Dichtungsfläche 34 des Gegenelements 30 angedrückt werden, so dass auch mit Hochdruck geführte Fluide von der Kapillaranschlusseinheit 10 sicher an das Gegenelement 30 und den dortigen Kanal 35 überführt werden können.

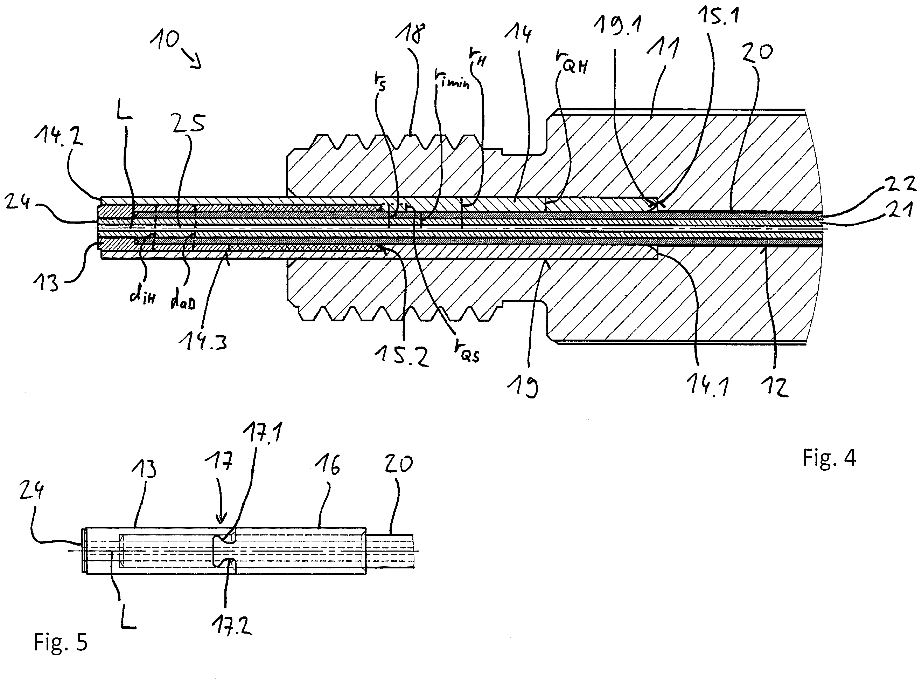

Ein Querschnitts-Radius r_{QS} = rₛ - r_{i,min} der zweiten Schubfläche 15.2 und ein maximaler Querschnitts-Radius r_{QH} = r_{H} - r_{i,min} des Hülsenelements 14 stehen dabei mindestens in einem Verhältnis r_{QH} : r_{QS} von 1,5:1. Dabei ist r_{i,min} der minimale Innenradius des Hülsenelements 14, rₛ der Außenradius der zweiten Schubfläche 15.2 und r_{H} der Außenradius des Hülsenelements 14 (vergl. Fig. 4).

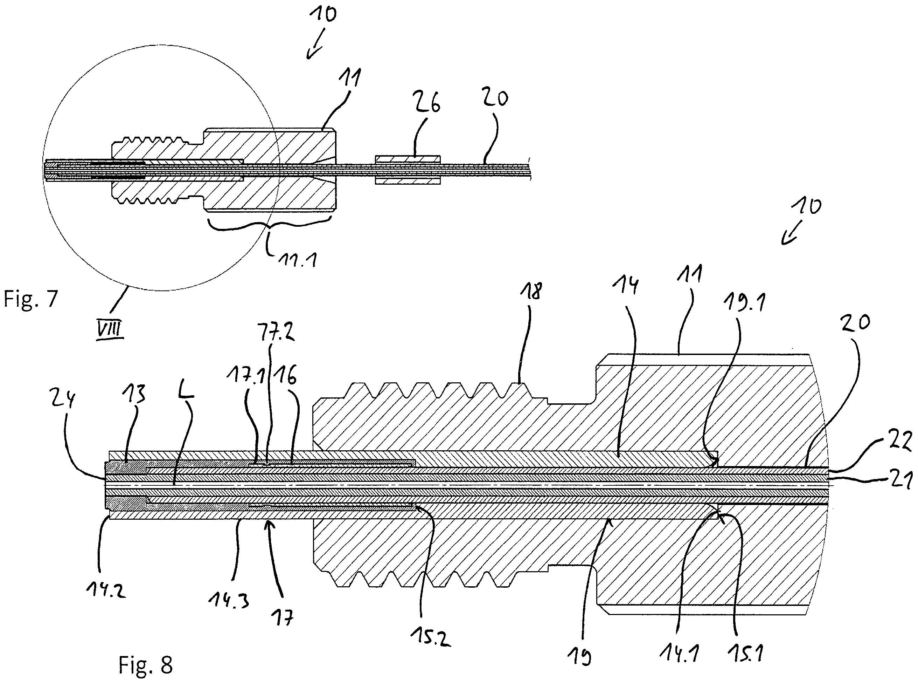

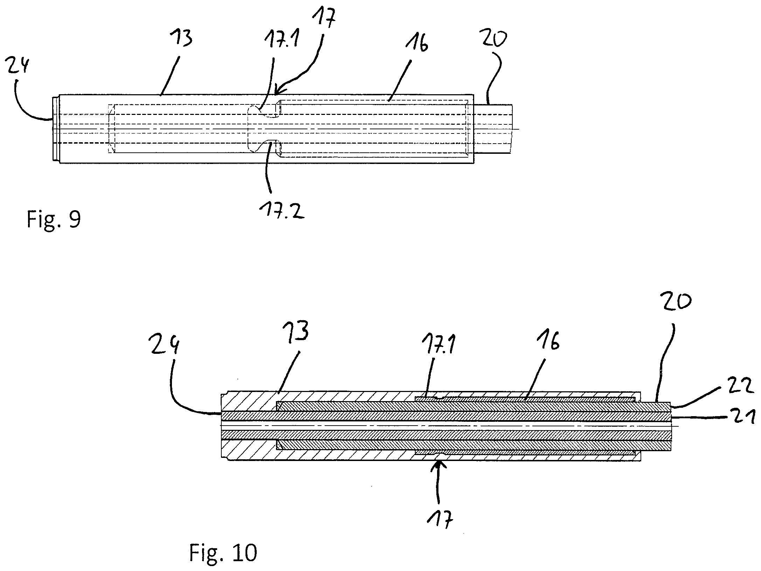

In den Figuren 7 bis 10 ist eine weitere Ausführungsform einer erfindungsgemäßen Kapillaranschlusseinheit 10 dargestellt. Diese unterscheidet sich von der zuvor beschriebenen Kapillaranschlusseinheit gemäß den Figuren 1 bis 6 dadurch, dass das Dichtelement 13 nicht nur mit dem Sicherungselement 16 verzahnt ist (siehe Verzahnung 17 in den Figuren 8 bis 10), sondern auch dadurch, dass das Dichtelement 13 das Sicherungselement 16 entlang seiner axialen Länge vollständig umschließt, so dass das Dichtelement 13 mit seiner im Aufnahmeraum 14.3 des Hülsenelements 14 liegenden Ende bzw. seiner dort befindlichen Stirnfläche an der zweiten Schubfläche 15.2 des metallischen Hülsenelements 14 anliegt. Ansonsten entspricht die hier dargestellte Ausführungsform der Kapillaranschlusseinheit 10 der vorbeschriebenen Kapillaranschlusseinheit 10 gemäß den Figuren 1 bis 6, so dass bzgl. hier nicht erwähnter Bezugszeichen und Merkmale vollumfänglich Bezug genommen wird auf die vorgehende Beschreibung zu den Figuren 1 bis 6.

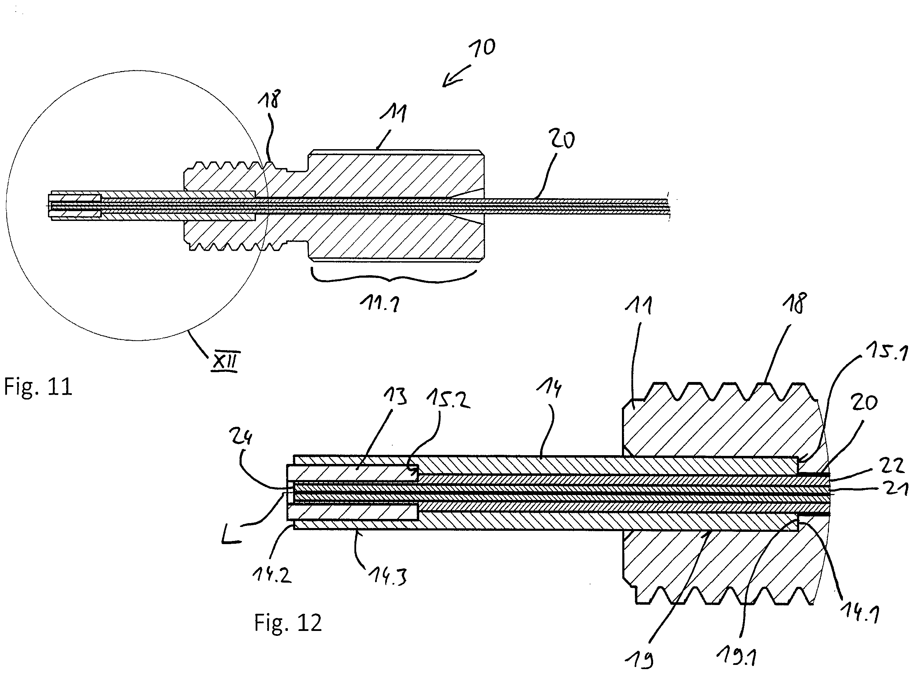

In den Figuren 11 und 12 ist eine weitere Ausführungsform einer erfindungsgemäßen Kapillaranschlusseinheit 10 wiedergegeben. Diese unterscheidet sich von der in den Figuren 1 bis 6 dargestellten Ausführungsform einer Kapillaranschlusseinheit 10 dadurch, dass die Innenkapillare bzw. erste Schale 21 der Kapillare 20 als Glaskapillare ausgebildet ist, während die Außenkapillare bzw. zweite Schale 22 der Kapillare 20 aus einem Thermoplasten, z.B. PEEK gebildet ist. Ferner ist bei dieser Ausführungsform einer Kapillaranschlusseinheit 10 nur ein Dichtelement 13 und kein zusätzliches Sicherungselement im Aufnahmeraum 14.3 des metallischen Hülsenelements 14 angeordnet. Dieses Dichtelement 13 aus einem thermoplastischen Material, z.B. PEEK ist mit der Außenkapillare 22 aus dem thermoplastischen Material, wie z.B. PEEK stoffschlüssig verbunden, z.B. mit dieser vollflächig verschweißt. Wie auch bei der Ausführungsform gemäß den Figuren 1 bis 6 und der Ausführungsform gemäß den Figuren 7 bis 10 ist auch hier das Hülsenelement 14 axial verschieblich gegenüber dem Anschlusselement 11 und ist das Dichtelement 13 mit der Kapillare 20 axial verschieblich gegenüber dem Hülsenelement 14. Im Weiteren entspricht die hier dargestellte Ausführungsform der Ausführungsform gemäß den Figuren 1 bis 6 auf deren Beschreibung bzgl. hier nicht erwähnter Bezugszeichen und Merkmale vollumfänglich Bezug genommen wird.

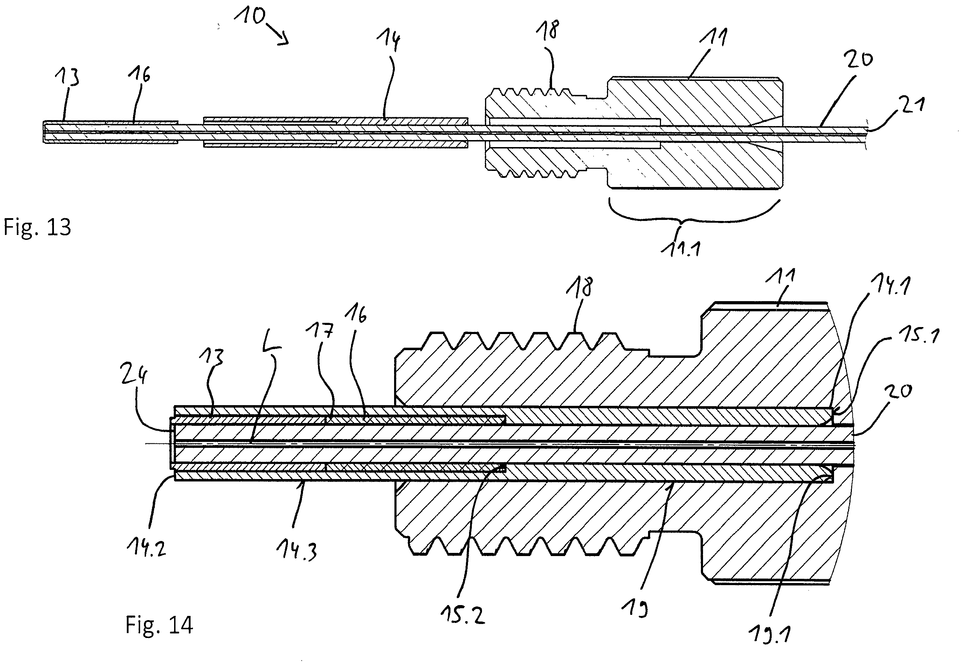

In den Figuren 13 und 14 ist eine weitere erfindungsgemäße Ausführungsform einer Kapillaranschlusseinheit 10 dargestellt. Diese unterscheidet sich dadurch von der in den Figuren 1 bis 6 dargestellten Kapillaranschlusseinheit, dass hier die Kapillare 20 nicht mehrschalig ausgebildet ist und nur aus einem Material besteht. Vorliegend ist die Kapillare gänzlich aus Edelstahl geformt, sie könnte aber alternativ auch aus einem Thermoplasten, z.B. PEEK oder aus Glas gefertigt sein. Das Dichtelement 13 besteht vorliegend aus einem Thermoplasten, z.B. PEEK und ist mittels der Verzahnung 17 wiederum mit dem Sicherungselement 16 verzahnt, wie dies auch bei der Ausführungsform nach den Figuren 1 bis 6 der Fall ist. Wegen weiterer hier nicht erwähnter Bezugszeichen und Merkmale dieser Ausführungsform der Kapillaranschlusseinheit 10 wird vollumfänglich auf die vorhergehende Beschreibung zur Ausführungsform gemäß den Figuren 1 bis 6 verwiesen.

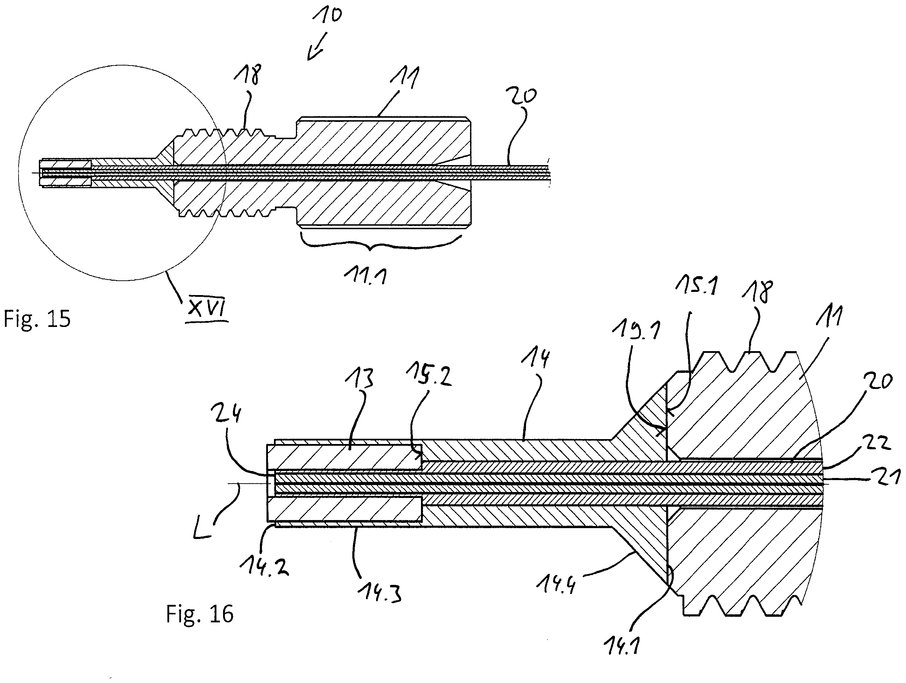

In den Figuren 15 und 16 ist eine weitere Ausführungsform einer erfindungsgemäßen Kapillaranschlusseinheit 10 wiedergegeben, die sich dadurch von der in den Figuren 11 und 12 dargestellten Ausführungsform unterscheidet, dass das Hülsenelement 14 nicht in einem Sackloch des Anschlusselements 11 aufgenommen ist, sondern dass das Hülsenelement 14 eine dem Anschlusselement 11 zugewandte radialumfängliche flanschartige Verbreiterung 14.4 aufweist, wodurch eine großflächige erste Schubfläche 15.1 am Hülsenelement 14 erzeugt ist. Diese kann großflächig an der Anschlagfläche 19.1 des Anschlusselements 11 in Anlage gebracht werden, wobei die Anschlagfläche 19.1 in dieser Ausführungsform der Kapillaranschlusseinheit 10 durch eine Stirnfläche des Anschlusselements 11 gebildet wird. Die Kapillare 20 ist in dieser Ausführungsform zweischalig ausgebildet und weist wiederum eine Innenkapillare aus Glas, einem Thermoplasten, z.B. PEEK oder Metall, z.B. Edelstahl oder Titan, auf. Die Außenkapillare 22 ist aus einem Thermoplasten, z.B. aus PEEK gefertigt, wobei das Dichtelement 13, welches ebenfalls aus einem Thermoplasten, z.B. PEEK besteht, stoffschlüssig mit der Außenkapillare 22 verbunden ist, z.B. mit dieser verschweißt ist. Die Kapillare 20 mit dem daran angeordneten Dichtelement 13 ist wiederum gegenüber dem Hülsenelement 14 (begrenzt) verschieblich und das Hülsenelement 14 begrenzt (verschieblich) gegenüber dem Anschlusselement 11. Es bleibt anzumerken, dass anstelle einer mehrschaligen Kapillare auch in dieser Ausführungsform eine einschalige Kapillare, z.B. aus einem Thermoplasten, wie z.B. PEEK, Glas, Metall, z.B. Edelstahl oder Titan, oder einer der vorbeschriebenen Keramiken verwendet werden kann.

Wegen weiterer hier nicht explizit erwähnter Bezugszeichen und Merkmale wird verwiesen auf die vorhergehende Beschreibung zu den Figuren 1 bis 6 und 11 bis 12.

### Bezugszeichenliste

- 10: Kapillaranschlusseinheit
- 11: Anschlusselement
- 11.1: Betätigungsabschnitte
- 12: axiale Durchführung
- 13: Dichtelement
- 14: metallisches Hülsenelement
- 14.1: erstes Ende
- 14.2: zweites Ende
- 14.3: Aufnahmebereich (für das Dichtelement)
- 14.4: flanschartige Verbreiterung
- 15.1: erste Schubfläche
- 15.2: zweite Schubfläche
- 16: Sicherungselement
- 17: Verzahnung
- 17.1: Zähne
- 17.2: Hinterschnitte
- 18: Gewinde
- 19: Sackloch
- 19.1: Anschlagfläche
- 20: Kapillare
- 21: erste Schale (Innenkapillare)
- 22: zweite Schale (Außenkapillare)
- 23: Endabschnitt
- 24: freies Ende
- 25: Kapillarkanal
- 26: Stoppelement
- 30: Gegenelement
- 32: Aufnahmeraum
- 34: Dichtfläche
- 35: Kanal
- 38: Gegengewinde
- F: Schubkraft
- L: Längsachse (der Kapillaranschlusseinheit)

## Patentansprüche

1. Kapillaranschlusseinheit (10) für Analysegeräte und medizinische Geräte,
- mit einer Kapillare (20), die wenigstens einen Endabschnitt (23) und daran ein freies Ende (24) aufweist,
- mit wenigstens einem an dem Endabschnitt (23) der Kapillare (20) angeordneten Anschlusselement (11),
wobei das Anschlusselement (11) eine axiale Durchführung (12) aufweist, durch welche die Kapillare (20) verläuft,
- mit einem Dichtelement (13), welches die Kapillare (20) wenigstens im Bereich ihres freien Endes (24) umgibt und
- mit einem metallischen Hülsenelement (14), welches zumindest bereichsweise das Dichtelement (13) radial außen umgibt, und welches ein erstes, dem Anschlusselement (11) zugewandtes Ende (14.1) und einen dem Anschlusselement (11) abgewandten Aufnahmebereich (14.3) aufweist,
wobei das Anschlusselement (11) mit dem freien Ende (24) der Kapillare (20) dazu eingerichtet ist, lösbar mit einem Gegenelement (30) verbunden zu werden und eine axiale Schubkraft (F) auf das Dichtelement (13) auszuüben,
**dadurch gekennzeichnet, dass** das Hülsenelement (14) sowohl gegenüber dem Anschlusselement (11) als auch gegenüber der Kapillare (20) mit dem Dichtelement (13) axial verschieblich geführt ist,
dass ein Innendurchmesser d_{iH} des Hülsenelements (14) in dem, dem Anschlusselement (11) abgewandten Aufnahmebereich (14.3) mindestens so groß ist wie der Außendurchmesser d_{aD} des Dichtelements (13), wobei das Hülsenelement (14) dazu konfiguriert ist, das Dichtelement (13) im Wesentlichen vollständig in seinen Aufnahmebereich (14.3) aufzunehmen und
dass das Hülsenelement (14) an seinem dem Anschlusselement (11) zugewandten ersten Ende (14.1) eine, in axialer Richtung dem Anschlusselement (11) zugewandte erste Schubfläche (15.1) zur Aufnahme der Schubkraft (F) des Anschlusselements (11) und nur eine radial innenliegende, zu einem dem Anschlusselement (11) abgewandten zweiten Ende (14.2) axial beabstandete und dem Dichtelement (13) zugewandte zweite Schubfläche (15.2) zur Weiterleitung der Schubkraft (F) an das Dichtelement (13) aufweist
und dadurch,
dass radial außen an der Kapillare (20) in einem Bereich direkt angrenzend an das Dichtelement (13) zum Anschlusselement (11) hin ein stationäres Sicherungselement (16) angeordnet ist, das mit der Kapillare (20) stoffschlüssig verbunden ist und mit dem Dichtelement (13) über eine Verzahnung (17) stoff- und formschlüssig verbunden ist.

2. Kapillaranschlusseinheit (1) nach Anspruch 1, **dadurch gekennzeichnet, dass** die Kapillaranschlusseinheit (1) keinen röhrenförmigen Kapillareinsatz mit ringförmigem Abschluss am Ende der Kapillare (20) aufweist.

3. Kapillaranschlusseinheit (1) nach Anspruch 1 oder 2, **dadurch gekennzeichnet, dass** das Dichtelement (13) mit der Kapillare (20) stoffschlüssig und fest verbunden ist.

4. Kapillaranschlusseinheit (1) nach einem der Ansprüche 1 bis 3, **dadurch gekennzeichnet, dass** das Dichtelement (13) aus wenigstens einem Material der Gruppe beinhaltend Fluorkunststoffe, Polyaryletherketone (PAEK), Mischungen aus Fluorkunststoffen und Polyaryletherketonen (PAEK), insbesondere ausgewählt aus der Gruppe beinhaltend Polytetrafluorethylen (PTFE), Polyvinylidenfluorid (PVDF), Polyetherketon (PEK), Polyetheretherketon (PEEK), Polyetherketonketon (PEKK), Polyetheretheretherketon (PEEEK), Polyetherketonetherketonketon (PEKEKK), und Polyetheretherketonetherketon (PEEKEK) gebildet ist.

5. Kapillaranschlusseinheit (1) nach einem der Ansprüche 1 bis 4, **dadurch gekennzeichnet, dass** die zweite Schubfläche (15.2) als Kreisringfläche ausgebildet ist, wobei ein Querschnitts-Radius r_{QS} = rₛ - r_{i,min} der zweiten Schubfläche (15.2) und ein maximaler Querschnitts-Radius r_{QH} = r_{H} - r_{i,min} des Hülsenelements (14) mindestens im Verhältnis r_{QH} : r_{QS} von 1,5:1 stehen und wobei r_{i,min} der minimale Innenradius des Hülsenelements (14) ist, rₛ der Außenradius der zweiten Schubfläche (15.2) ist und r_{H} der Außenradius des Hülsenelements (14) ist.

6. Kapillaranschlusseinheit (1) nach einem der Ansprüche 1 bis 5, **dadurch gekennzeichnet, dass** die Kapillare (20) zumindest im Endabschnitt (23) der Kapillare (20), mehrschalig, vorzugsweise zweischalig ausgebildet ist.

7. Kapillaranschlusseinheit (1) nach Anspruch 6, **dadurch gekennzeichnet, dass** eine erste, innere Schale (21) der Kapillare (20) aus einem Material der Gruppe bestehend aus Glas, insbesondere fused Silica, einem thermoplastischen Material, Metall und Keramik gebildet ist
und
dass eine zweite, äußere Schale (22) aus einem Material der Gruppe einem thermoplastischen Material, Metall und Keramik gebildet ist.

8. Kapillaranschlusseinheit (1) nach einem der Ansprüche 1 bis 7, **dadurch gekennzeichnet, dass** das stationäre Sicherungselement (16) aus Metall, insbesondere aus Stahl gefertigt und ring- oder hülsenförmig ausgebildet ist und die Kapillare (20) bereichsweise umfängt.

9. Kapillaranschlusseinheit (1) nach einem der Ansprüche 1 bis 8, **dadurch gekennzeichnet, dass** die radial innenliegende zweite Schubfläche (15.2) des Hülsenelements (14) vermittelt über das stationäre Hülsenelement (14) mit dem Dichtelement (13) zur Übertragung der Schubkraft (F) des Anschlusselements (11) zusammenwirkt.

10. Kapillaranschlusseinheit (1) nach einem der Ansprüche 1 bis 9, **dadurch gekennzeichnet, dass** das Anschlusselement (11) auf der Kapillare (20) begrenzt verschiebbar geführt ist, wobei die Verschiebbarkeit des Anschlusselements (11) auf der Kapillare (20) durch ein mit der Kapillare (20) ortsfest verbundenes Stoppelement (26) begrenzt ist.

## Claims

1. Capillary connection unit (10) for analysis devices and medical devices
- comprising a capillary (20) having at least one end section (23) and a free end (24) thereon,
- comprising at least one connection element (11) arranged on the end section (23) of the capillary (20),
wherein the connection element (11) has an axial guide-through (12) through which the capillary (20) runs,
- comprising a sealing element (13) surrounding the capillary (20) at least in the region of its free end (24), and
- comprising a metal sleeve element (14) which radially externally surrounds the sealing element (13) at least in regions and which has a first end (14.1) facing the connection element (11) and a receiving region (14.3) facing away from the connection element (11), wherein the connection element (11) with the free end (24) of the capillary (20) is configured to be detachably connected to a counter element (30) and to exert an axial thrust force (F) onto the sealing element (13),
**characterized in that** the sleeve element (14) is axially movably guided in relation to both the connection element (11) and the capillary (20) with the sealing element (13),
that an inner diameter d_{iH} of the sleeve element (14) in the receiving region (14.3) facing away from the connection element (11) is at least as large as the outer diameter d_{aD} of the sealing element (13), the sleeve element (14) being configured to substantially completely accommodate the sealing element (13) in its receiving region (14.3), and
that the sleeve element (14) has at its first end (14.1) facing the connection element (11) a first thrust surface (15.1) facing the connection element (11) in the axial direction for receiving the thrust force (F) of the connection element (11) and only one radially internal second thrust surface (15.2) facing the sealing element (13) and axially spaced from a second end (14.2) facing away from the connection element (11) for forwarding the thrust force (F) to the sealing element (13),
and **in that**
a stationary securing element (16) is arranged radially externally on the capillary (20) in a region directly adjacent to the sealing element (13) towards the connection element (11) and is connected to the capillary (20) in a firmly bonded manner and is connected to the sealing element (13) in a firmly bonded and form-fitting manner via a toothed feature (17).

2. Capillary connection unit (1) according to claim 1, **characterized in that** the capillary connection unit (1) does not have any tubular capillary insert having an annular end at the end of the capillary (20).

3. Capillary connection unit (1) according to claim 1 or 2, **characterized in that** the sealing element (13) is firmly bonded and connected to the capillary (20) in a bonded manner.

4. Capillary connection unit (1) according to any of claims 1 to 3, **characterized in that** the sealing element (13) is formed from at least one material of the group comprising fluoroplastics, polyaryl ether ketones (PAEK), mixtures of fluoroplastics and polyaryl ether ketones (PAEK), in particular selected from the group comprising polytetrafluoroethylene (PTFE), polyvinylidene fluoride (PVDF), polyether ketone (PEK), polyether ether ketone (PEEK), polyether ketone ketone (PEKK), polyether ether ether ketone (PEEEK), polyether ketone ether ketone ketone (PEKEKK), and polyether ether ketone ether ketone (PEEKEK).

5. Capillary connection unit (1) according to any of claims 1 to 4, **characterized in that** the second thrust surface (15.2) is formed as an annular surface, wherein a crosssection radius r_{QS} = rₛ - rₘᵢₙ of the second thrust surface (15.2) and a maximum crosssection radius r_{QH} = r_{H} - r_{i,min} of the sleeve element (14) are at least in the ratio r_{QH} : r_{QS} of 1.5:1 and where r_{i,min} is the minimum inner radius of the sleeve element (14), r_{S} is the outer radius of the second thrust surface (15.2) and r_{H} is the outer radius of the sleeve element (14).

6. Capillary connection unit (1) according to any of claims 1 to 5, **characterized in that** the capillary (20) is multi-shelled, preferably two-shelled, at least in the end section (23) of the capillary (20).

7. Capillary connection unit (1) according to claim 6, **characterized in that** a first, inner shell (21) of the capillary (20) is formed from a material selected from the group consisting of glass, in particular fused silica, a thermoplastic material, metal, and ceramic, and
that a second, outer shell (22) is formed from a material selected from the group consisting of a thermoplastic material, metal, and ceramic.

8. Capillary connection unit (1) according to any of claims 1 to 7, **characterized in that** the stationary securing element (16) is made of metal, in particular steel, and is of annular or sleeve-shaped design and encloses the capillary (20) in regions.

9. Capillary connection unit (1) according to any of claims 1 to 8, **characterized in that** the radially internal second thrust surface (15.2) of the sleeve element (14) interacts in a mediated manner via the stationary sleeve element (14) with the sealing element (13) in order to transmit the thrust force (F) of the connection element (11).

10. Capillary connection unit (1) according to any of claims 1 to 9, **characterized in that** the connection element (11) is movably guided to a limited extent on the capillary (20), wherein the movability of the connection element (11) on the capillary (20) is limited by a stop element (26) fixedly connected to the capillary (20).

## Revendications

1. Unité de raccordement de capillaire (10) destinée à des appareils d'analyse et des appareils médicaux,
- comportant une capillaire (20) pourvue d'au moins une partie terminale (23) dotée d'une extrémité libre (24),
- comportant au moins un élément de raccordement (11) disposé sur la partie terminale (23) de la capillaire (20),
l'élément de raccordement (11) comportant un passage (12) axial à travers lequel s'étend la capillaire (20),
- comportant un élément d'étanchéité (13) qui entoure la capillaire (20) au moins au niveau de son extrémité libre (24), et
- comportant un élément de gaine (14) métallique qui entoure radialement à l'extérieur au moins certaines parties de l'élément d'étanchéité (13) et qui comporte une première extrémité (14.1) laquelle fait face à l'élément de raccordement (11) et une zone de réception (14.3) laquelle se trouve à l'opposé de l'élément de raccordement (11),
l'élément de raccordement (11) étant conçu pour être relié, à travers l'extrémité libre (24) de la capillaire (20), de manière détachable à un élément correspondant (30) et pour exercer une poussée axiale (F) sur l'élément d'étanchéité (13),
**caractérisée en ce que** l'élément de gaine (14) est guidé de manière à ce qu'il puisse être déplacé axialement, tant par rapport à l'élément de raccordement (11) que par rapport à la capillaire (20) pourvue de l'élément d'étanchéité (13),
qu'un diamètre intérieur d_{iH} de l'élément de gaine (14) dans la zone de réception (14.3) se trouvant à l'opposé de l'élément de raccordement (11) est supérieur ou égal au diamètre extérieur d_{aD} de l'élément d'étanchéité (13), l'élément de gaine (14) étant configuré de manière à ce qu'il reçoive sensiblement l'intégralité de l'élément d'étanchéité (13) au sein de sa zone de réception (14.3), et
que l'élément de gaine (14) comporte, à sa première extrémité (14.1) faisant face à l'élément de raccordement (11), une première face de poussée (15.1) qui fait face à l'élément de raccordement (11) selon une direction axiale et qui est destinée à recevoir la poussée (F) de l'élément de raccordement (11), et une seule deuxième face de poussée (15.2) qui se trouve radialement à l'intérieur, qui est axialement espacée d'une deuxième extrémité (14.2) se trouvant à l'opposé de l'élément de raccordement (11) et qui est destinée à transmettre la poussée (F) à l'élément d'étanchéité (13),
et **en ce que**
un élément de sécurisation stationnaire (16), disposé radialement à l'extérieur de la capillaire (20) dans une zone directement adjacente à l'élément d'étanchéité (13) et s'étendant vers l'élément de raccordement (11), est relié à la capillaire (20) par liaison de matière tout en étant relié, par liaison de matière et par complémentarité de forme à travers une denture (17), à l'élément d'étanchéité (13).

2. Unité de raccordement de capillaire (1) selon la revendication 1, **caractérisée en ce que** l'unité de raccordement de capillaire (1) ne comporte aucun insert capillaire tubulaire présentant, à l'extrémité de la capillaire (20), un embout annulaire.

3. Unité de raccordement de capillaire (1) selon les revendications 1 ou 2, **caractérisée en ce que** l'élément d'étanchéité (13) est solidaire à la capillaire (20) et relié à celle-ci par liaison de matière.

4. Unité de raccordement de capillaire (1) selon l'une des revendications 1 à 3, **caractérisée en ce que** l'élément d'étanchéité (13) est formé à partir d'au moins un matériau du groupe incluant les matières plastiques fluorées, les polyaryléthercétones (PAEK), les mélange de matières plastiques fluorées et de polyaryléthercétones (PAEK), il étant notamment choisi dans le groupe incluant le polytétrafluoroéthylène (PTFE), le fluorure de polyvinylidène (PVDF), la polyéthercétone (PEK), la polyétheréthercétone (PEEK), la polyéthercétonecétone (PEKK), la polyétherétheréthercétone (PEEEK), la polyéthercétoneéthercétonecétone (PEKEKK) et la polyétheréthercétoneéthercétone (PEEKEK).

5. Unité de raccordement capillaire (1) selon l'une des revendications 1 à 4, **caractérisée en ce que** la deuxième face de poussée (15.2) est réalisée sous forme une face d'anneau circulaire, le rapport r_{QH} : r_{QS} entre un rayon de section transversale r_{QS} = rₛ - r_{i,min} de la deuxième face de poussée (15.2) et un rayon maximal de section transversale r_{QH} = r_{H} - r_{i,min} de l'élément de gaine (14) étant supérieur ou égal à 1,5 : 1, et r_{i,min} étant le rayon intérieur minimal de l'élément de gaine (14), rₛ étant de rayon extérieur de la deuxième face de poussée (15.2) et r_{H} étant le rayon extérieur de l'élément de gaine (14).

6. Unité de raccordement de capillaire (1) selon l'une des revendications 1 à 5, **caractérisée en ce que** la capillaire (20) est formée, au moins dans la partie terminale (23) de la capillaire (20), de plusieurs coques, préférentiellement de deux coques.

7. Unité de raccordement de capillaire (1) selon la revendication 6, **caractérisée en ce qu'**une première coque intérieure (21) de la capillaire (20) est réalisée en un matériau du groupe constitué par du verre, s'agissant notamment de verre de silice, un matériau thermoplastique, un métal et un matériau céramique
et
qu'une deuxième coque extérieure (22) est réalisée en un matériau du groupe d'un matériau thermoplastique, d'un métal et d'un matériau céramique.

8. Unité de raccordement de capillaire (1) selon l'une des revendications 1 à 7, **caractérisée en ce que** l'élément de sécurisation stationnaire (16) est fabriqué en métal, notamment en acier, et réalisé de manière à avoir la forme d'un anneau ou d'une gaine et qu'il vient entourer certaines parties de la capillaire (20).

9. Unité de raccordement de capillaire (1) selon l'une des revendications 1 à 8, **caractérisée en ce que** la deuxième face de poussée (15.2) de l'élément de gaine (14) située radialement à l'intérieur vient coopérer, par l'intermédiaire de l'élément de gaine (14) stationnaire, avec l'élément d'étanchéité (13) afin de transmettre la poussée (F) de l'élément de raccordement (11).

10. Unité de raccordement de capillaire (1) selon l'une des revendications 1 à 9, **caractérisée en ce que** l'élément de raccordement (11) est guidé de manière à ce qu'il puisse subir un déplacement limité sur la capillaire (20), l'envergure du déplacement de l'élément de raccordement (11) sur la capillaire (20) étant limitée par un élément d'arrêt (26) solidaire à la capillaire (20).
